# EUROPEAN PATENT APPLICATION

(11) **EP 4 585 436 A1**
(43) Date of publication of application: **16.07.2025**
(21) Application number: 22959933.7
(22) Date of filing: 28.09.2022
(51) Int. Cl.: B60K 1/04, B62D 21/02

(54) **SKATEBOARD AND VEHICLE**

(71) Applicant: Shenzhen Yinwang Intelligent Technologies Co., Ltd., Shenzhen, Guangdong 518129 (CN)
(72) Inventor: REN, Muhan, Shenzhen, Guangdong 518129 (CN)
(74) Representative: Maiwald GmbH
(86) International application number: PCT/CN2022/122183
(87) International publication number: WO 2024/065288

(57) **Abstract**

This application relates to the field of transport means technologies, and provides a skateboard chassis and a vehicle, to resolve a problem of complex assembly and disassembly of an electric drive assembly. The skateboard chassis provided in this application includes a primary vehicle frame and an electric drive assembly. The primary vehicle frame includes a first longitudinal beam, a second longitudinal beam, and a plurality of horizontal beams. The first longitudinal beam and the second longitudinal beam are spaced apart in a vehicle width direction, each of the horizontal beams is connected between the first longitudinal beam and the second longitudinal beam, and the plurality of horizontal beams are spaced apart. The electric drive assembly is disposed between a front section of the first longitudinal beam and a front section of the second longitudinal beam, and both the front section of the first longitudinal beam and the front section of the second longitudinal beam are of single-layer beam structures; or the electric drive assembly is disposed between a rear section of the first longitudinal beam and a rear section of the second longitudinal beam, and both the rear section of the first longitudinal beam and the rear section of the second longitudinal beam are of single-layer beam structures. **In** the skateboard chassis provided in this application, in a vertical direction, no horizontal beam blocks the electric drive assembly, and disassembly and assembly difficulty is low. This helps improve production efficiency and after-sales efficiency.

## Description

### TECHNICAL FIELD

This application relates to the field of transport means technologies, and in particular, to a skateboard chassis and a vehicle.

### BACKGROUND

For a vehicle equipped with a conventional bearing upper vehicle body, due to assembly and performance requirements, a chassis needs to be connected to the upper vehicle body through front and rear secondary vehicle frames. An electric drive system, a front-end module system, and a chassis system including a suspension, steering, a brake, and the like are first pre-assembled with the front and rear secondary vehicle frames separately to form front and rear axle assemblies, and then the front and rear axle assemblies are assembled with the upper vehicle body, to form the entire vehicle.

However, a skateboard (Skateboard) chassis, as a product for meeting a research and development requirement for upper-lower separation of the entire vehicle, differs significantly in structure from the chassis of the vehicle equipped with the conventional bearing vehicle body. In the skateboard chassis, the primary vehicle frame is configured to mount a chassis and a power system. The skateboard chassis does not have an independent secondary vehicle frame, but integrates the primary vehicle frame and the secondary vehicle frame.

However, this integration manner is merely a simplification of a simple connection manner. For example, a bolt connection or a bushing connection is changed to welding. However, a structural frame is still complex, large space in a vertical direction is occupied, and mounting and disassembly of an electric drive assembly are complex.

### SUMMARY

This application provides a skateboard chassis and a vehicle, to improve integration of a primary vehicle frame, reduce occupied space in a vertical direction, and facilitate disassembly and mounting of an electric drive assembly.

According to a first aspect, this application provides a skateboard chassis. The skateboard chassis includes a primary vehicle frame and an electrical drive assembly. The primary vehicle frame includes a first longitudinal beam and a second longitudinal beam that are spaced apart in a vehicle width direction, and a plurality of horizontal beams that are connected between the first longitudinal beam and the second longitudinal beam and that are spaced apart. To reduce occupied space in a vertical direction, the following two solutions are provided. In one case, the electric drive assembly is disposed between a front section of the first longitudinal beam and a front section of the second longitudinal beam, and both the front section of the first longitudinal beam and the front section of the second longitudinal beam are of single-layer beam structures. Alternatively, in another case, the electric drive assembly is disposed between a rear section of the first longitudinal beam and a rear section of the second longitudinal beam, and both the rear section of the first longitudinal beam and the rear section of the second longitudinal beam are of single-layer beam structures. The single-layer beam structure is used, so that the occupied space in the vertical direction can be reduced. In addition, in the vertical direction, no horizontal beam blocks the electric drive assembly. When the skateboard chassis is assembled, the electric drive assembly may be placed from top to bottom in the vertical direction, so that mounting operation difficulty is low. This helps improve production efficiency and assembly precision. There is no horizontal beam blocking below, so that the electric drive assembly can be easily removed from below, to facilitate after-sales maintenance. Compared with a dual-layer longitudinal beam structure, the single-layer beam structure is simplified, and too many structural parts such as horizontal beams and columns are not required, to implement high integration.

In a specific implementable solution, the electric drive assembly has a transmission half shaft configured to transmit power. To facilitate penetration of the transmission half shaft, a first via that penetrates through the first longitudinal beam in the vehicle width direction is provided at a location that is on the first longitudinal beam and that corresponds to the electric drive assembly, and the transmission half shaft penetrates through the first via; and/or a second via that penetrates through the second longitudinal beam in the vehicle width direction is formed at a location that is on the second longitudinal beam and that corresponds to the electric drive assembly, and the transmission half shaft penetrates through the second via. In this way, a steering gear may be disposed between the first longitudinal beam and the second longitudinal beam, to provide feasibility for implementing spatial multiplexing in the vertical direction, and reduce a structural height of the longitudinal beam, thereby reducing a floor height of a passenger compartment and increasing space of the passenger compartment.

In a specific implementable solution, in a traveling process of the vehicle, the transmission half shaft jumps to an appropriate extent, and a direction more away from the electric drive assembly indicates larger jump amplitude. Therefore, an inner diameter of the first via gradually increases in a direction away from the second longitudinal beam. For a same reason, an inner diameter of the second via gradually increases in a direction away from the first longitudinal beam.

In a specific implementable solution, to connect a suspension to the primary vehicle frame, the skateboard chassis further includes a plurality of first suspension swing arms and a plurality of second suspension swing arms. These first suspension swing arms are all hinged to the first longitudinal beam or the horizontal beams. In the vertical direction, projection of each of the first suspension swing arms overlaps projection of the first longitudinal beam. This implements spatial multiplexing in the vehicle width direction, can reduce occupied space, and increase a length of the first suspension swing arm. Similarly, these second suspension swing arms are also hinged to the second longitudinal beam or the horizontal beams, and projection of each of the second suspension swing arms overlaps projection of the second longitudinal beam. This also helps implement spatial multiplexing in the vehicle width direction, can reduce occupied space, and increase a length of the second suspension swing arm.

In a specific implementable solution, at least some of the first suspension swing arms are hinged to at least one surface that is of the first longitudinal beam and that is located in the vertical direction. The first suspension swing arm is conveniently mounted on the surface of the first longitudinal beam, and the first suspension swing arm has large movable space and a high degree of freedom. At least some of the second suspension swing arms are hinged to at least one surface of the second longitudinal beam in the vertical direction, and also has the foregoing effects.

In a specific implementable solution, the skateboard chassis further includes the steering gear. The steering gear includes a bar-shaped housing. To fasten the steering gear, the first longitudinal beam is provided with a first connection structure, and the second longitudinal beam is provided with a second connection structure. The first connection structure and the second connection structure may be disposed opposite to each other in the vehicle width direction, and the bar-shaped housing is connected between the first connection structure and the second connection structure, to form one of the horizontal beams. This improves integration and simplifies a structure.

In a specific implementable solution, to reduce occupied space in the vertical direction, the first connection structure is located on a surface that is of the first longitudinal beam and that faces the second longitudinal beam, and the second connection structure is located on a surface that is of the second longitudinal beam and that faces the first longitudinal beam. In this way, spatial multiplexing is implemented in the vertical direction.

The first connection structure and the second connection structure may be in a plurality of forms. To facilitate assembly and disassembly, the following specific form is provided herein. In a specific implementable solution, the first connection structure includes two first clamp plates that are parallel to each other, and the second connection structure includes two second clamp plates that are parallel to each other. One end of the bar-shaped housing is detachably connected between the two first clamp plates, and the other end of the bar-shaped housing is detachably connected between the two second clamp plates. This facilitates assembly and disassembly in the vertical direction, and limits the bar-shaped housing in the vertical direction.

In a specific implementable solution, the steering gear further includes a steering tie rod extending from two ends of the bar-shaped housing. To provide an accommodation location for the steering tie rod and reduce occupied space in the vertical direction, a first avoidance hole that penetrates through the first longitudinal beam in the vehicle width direction is provided at a location that is on the first longitudinal beam and that corresponds to the first connection structure, so that the steering tie rod penetrates through the first avoidance hole. Similarly, a second avoidance hole that penetrates through the second longitudinal beam in the vehicle width direction is provided at a location that is on the second longitudinal beam and that corresponds to the second connection structure, so that the steering tie rod penetrates through the second avoidance hole. For a vehicle model with only one-side steering, only the first avoidance hole or the second avoidance hole may be reserved. According to the foregoing solution, the electric drive assembly may be disposed between the first longitudinal beam and the second longitudinal beam, to provide feasibility for implementing spatial multiplexing in the vertical direction, and reduce a structural height of the longitudinal beam, thereby reducing a floor height of a passenger compartment and increasing space of the passenger compartment.

In a specific implementable solution, the steering tie rod bounces, and a farther distance from the bar-shaped housing indicates larger bounce amplitude. Therefore, an inner diameter of the first avoidance hole gradually increases in the direction away from the second longitudinal beam. Similarly, an inner diameter of the second avoidance hole gradually increases in the direction away from the first longitudinal beam, to provide bounce space for the transmission half shaft.

In a specific implementable solution, to provide stable support for the electric drive assembly, a suspension support needs to be disposed. Herein, the suspension support is connected to the bar-shaped housing, and the electric drive assembly is connected to the suspension support through a support shaft. The suspension support has a support hole, and the support shaft is located in the support hole.

In a specific implementable solution, the bar-shaped housing and the suspension bracket are of an integrally cast structure. In this way, the integrally cast structure can have functions of both the bar-shaped housing of the steering gear and the suspension support of the electrical drive assembly. This lowers a process difficulty and has high fitting precision.

In a specific implementable solution, when the skateboard chassis further includes the plurality of first suspension swing arms and the plurality of second suspension swing arms, at least some of the first suspension swing arms are hinged to the bar-shaped housing, spatial multiplexing in the width direction can be implemented, and the length of the first suspension swing arm can be further increased. Similarly, at least some of the second suspension swing arms are hinged to the bar-shaped housing.

According to a second aspect, a vehicle is provided. The vehicle includes an upper vehicle body and the skateboard chassis in any one of the foregoing technical solutions. The upper vehicle body is connected to a first longitudinal beam and a second longitudinal beam. For beneficial effects of the vehicle, refer to those of the skateboard chassis provided in the foregoing technical solutions.

### BRIEF DESCRIPTION OF DRAWINGS

FIG. 1 shows a vehicle according to an embodiment of this application;
FIG. 2 is a diagram of a structure of a rear section of a primary vehicle frame in some technical solutions;
FIG. 3a is a three-dimensional diagram of a skateboard chassis according to an embodiment of this application;
FIG. 3b is a partial enlarged view of a rear section of the skateboard chassis shown in FIG. 3a;
FIG. 4a is a main view of the skateboard chassis shown in FIG. 3a;
FIG. 4b is a partial enlarged view of a rear section of the skateboard chassis shown in FIG. 4a;
FIG. 4c is an enlarged view of a sectional view in an A-A direction in FIG. 4b;
FIG. 5a is a top view of the skateboard chassis shown in FIG. 3a;
FIG. 5b is a partial enlarged view of a rear section of the skateboard chassis shown in FIG. 5a;
FIG. 6a is a bottom view of the skateboard chassis shown in FIG. 3a; and
FIG. 6b is a partial enlarged view of a rear section of the skateboard chassis shown in FIG. 6a.

### DESCRIPTION OF EMBODIMENTS

To make the objectives, technical solutions, and advantages of this application clearer, the following further describes this application in detail with reference to the accompanying drawings.

For clearer understanding of the following, some concepts are briefly described below.

A primary vehicle frame is a frame structure that is located at a lower part of an upper vehicle body and that runs through the vehicle from front to rear, and includes a front section, a middle section, and a rear section. The primary vehicle frame is used to support and connect to various assemblies of a vehicle, for example, systems such as an upper vehicle body, a chassis, a power battery, and an electric drive, to ensure that each assembly is in a correct location and bears various loads inside and outside the vehicle.

The front section of the primary vehicle frame is a primary vehicle frame area that is used to carry a front drive system and that is connected to a front suspension or a wheel, and is a part that is of the primary vehicle frame and that is located before a firewall or a front torque box.

The middle section of the primary vehicle frame is a primary vehicle frame area that is used to carry a battery pack system and that is connected to a passenger compartment of the upper vehicle body, and is a part that is of the primary vehicle frame and that is located between the front torque box and a rear torque box.

The rear section of the primary vehicle frame is a primary vehicle frame area that is used to carry a rear drive system and that is connected to a rear suspension or a wheel, and is a part that is of the primary vehicle frame and that is located behind the rear torque box.

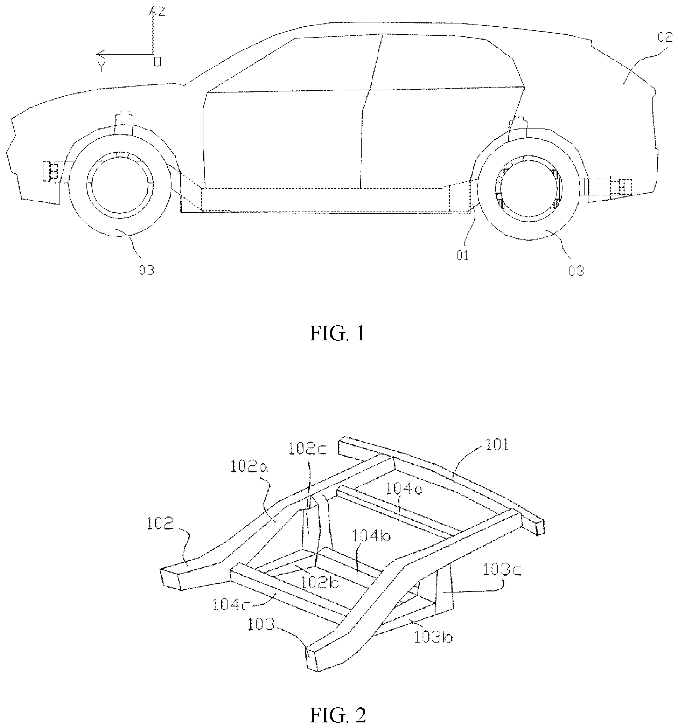

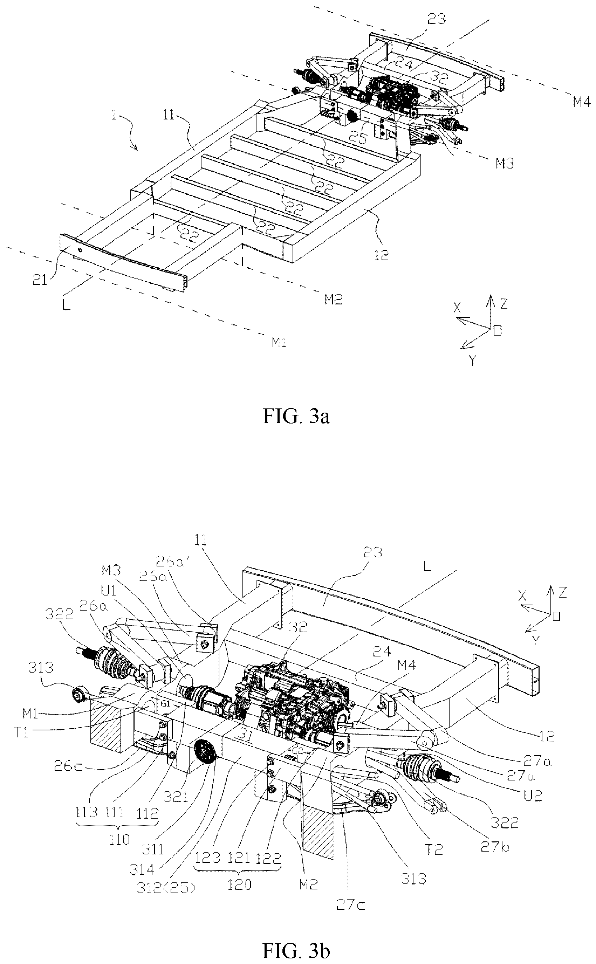

To facilitate understanding of a skateboard chassis provided in embodiments of this application, an application scenario of the skateboard chassis is first described. FIG. 1 shows a vehicle according to an embodiment of this application. An application scenario of a skateboard chassis according to an embodiment of this application can be learned from FIG. 1. As shown in FIG. 1, a skateboard chassis 01 may be used in an entire vehicle, and is used as a carrier of an upper vehicle body 02. Compared with a conventional chassis, the skateboard chassis 01 has complete functions, for example, basic functions such as independent driving, control, acceleration, and deceleration, and has some security attributes and intelligent attributes. The skateboard chassis 01 includes a primary vehicle frame, to carry related components for implementing the foregoing functions. The upper vehicle body 02 and the skateboard chassis 01 are separately manufactured, and after the upper vehicle body 02 and the skateboard chassis 01 are separately formed, the upper vehicle body 02 is assembled above the skateboard chassis 01, and is fastened to the primary vehicle frame. Wheels 03 are separately mounted in a vehicle width direction X (refer to FIG. 3a mentioned below) of the skateboard chassis 01, where the vehicle width direction X is a width direction of the vehicle.

In some technical solutions, a rear section of the primary vehicle frame bifurcates a longitudinal beam into a double-layer beam structure, and double-layer horizontal beams are correspondingly connected to double-layer longitudinal beams respectively. FIG. 2 is a diagram of a structure of the rear section of the primary vehicle frame in some technical solutions. As shown in FIG. 2, a longitudinal beam 102 is bifurcated into an upper secondary longitudinal beam 102a and a lower secondary longitudinal beam 102b in the rear section, and the secondary longitudinal beam 102a is connected to the secondary longitudinal beam 102b through a vertically extending connecting beam 102c. A longitudinal beam 103 is bifurcated into an upper secondary longitudinal beam 103a and a lower secondary longitudinal beam 103b in the rear section, and the secondary longitudinal beam 103a is connected to the secondary longitudinal beam 103b through a vertically extending connecting beam 103c.

A free end of the secondary longitudinal beam 102a is connected to a free end of the secondary longitudinal beam 103a through a capping horizontal beam 101, a bifurcation location of the longitudinal beam 102 is connected to a bifurcation location of the longitudinal beam 103 through a horizontal beam 104c, an end of the secondary longitudinal beam 102b is connected to an end of the secondary longitudinal beam 103b through a horizontal beam 104b, and a middle of the secondary longitudinal beam 102a is connected to a middle of the secondary longitudinal beam 103a through a horizontal beam 104a. The horizontal beam 104a and the horizontal beam 104b are distributed in a vertical direction. Space between the horizontal beam 104a and the horizontal beam 104b is used to arrange an electric drive assembly. However, due to blocking of the horizontal beam 104a located above, the electric drive assembly cannot be assembled from above. As a result, a mounting operation is complex, and production efficiency is low. Due to blocking of the horizontal beam 104b located below, it is inconvenient for disassembly from the bottom, which is inconvenient for after-sales maintenance.

In view of this, embodiments of this application provide a skateboard chassis.

FIG. 3a is a three-dimensional diagram of a skateboard chassis according to an embodiment of this application, and FIG. 3b is a partial enlarged diagram of a rear section of the skateboard chassis shown in FIG. 3a. With reference to FIG. 3a and FIG. 3b, the skateboard chassis includes a primary vehicle frame 1 and an electric drive assembly 32. The primary vehicle frame 1 includes a first longitudinal beam 11, a second longitudinal beam 12, and a plurality of horizontal beams. It should be understood that a "longitudinal beam" in phrases such as the first longitudinal beam 11 and the second longitudinal beam 12 in embodiments of this application indicates only a beam structure made of a profile, and does not include another accessory connected to the beam structure. Interfaces for connecting to an upper vehicle body 02 may be provided on upper surfaces and side surfaces of the first longitudinal beam 11, the second longitudinal beam 12, and the horizontal beams. These interfaces may be bolt holes to implement a bolt connection. However, structures such as welding interfaces and riveting interfaces may alternatively be provided. The primary vehicle frame 1 may be integrally cast and formed as a whole. The first longitudinal beam 11 and the second longitudinal beam 12 extend in a longitudinal direction Y as a whole, where the longitudinal direction Y is a front-rear direction of a vehicle. In addition, the first longitudinal beam 11 and the second longitudinal beam 12 are spaced apart and disposed side by side in the vehicle width direction X, and may be symmetrically disposed with respect to a central axis L. The plurality of horizontal beams are connected between the first longitudinal beam 11 and the second longitudinal beam 12, and are spaced apart in the longitudinal direction Y.

A part that is of the primary vehicle frame 1 and that is located between a boundary line M1 and a boundary line M2 is a front section of the primary vehicle frame 1, a part that is of the primary vehicle frame 1 and that is located between the boundary line M2 and a boundary line M3 is a middle section of the primary vehicle frame 1, and a part that is of the primary vehicle frame 1 and that is located between the boundary line M3 and a boundary line M4 is a rear section of the primary vehicle frame 1. The front section, the middle section, and the rear section of the primary vehicle frame 1 are in a one-to-one correspondence with the front section, the middle section, and the rear section of the entire skateboard chassis 01 in sequence in terms of locations. A middle section of the first longitudinal beam 11 is a part that is of the first longitudinal beam 11 and that is located in the middle section of the primary vehicle frame 1. Other similar descriptions can be deduced by analogy. For example, a front section of the second longitudinal beam 12 is a part that is of the second longitudinal beam 12 and that is located in the front section of the primary vehicle frame 1. A distance between the middle section of the first longitudinal beam 11 and a middle section of the second longitudinal beam 12 is greater than a distance between a front section of the first longitudinal beam 11 and the front section of the second longitudinal beam 12, and is greater than a distance between a rear section of the first longitudinal beam 11 and a rear section of the second longitudinal beam 12. The middle section of the first longitudinal beam 11 and the middle section of the second longitudinal beam 12 are close to each other in parts close to the front sections, to reduce the distance, and the parts that are of the first longitudinal beam 11 and the second longitudinal beam 12 and that are close to each other gradually rise, to implement a transitional connection to the front sections located at a higher location. The middle section of the first longitudinal beam 11 and the middle section of the second longitudinal beam 12 are close to each other in parts close to the rear sections, to reduce the distance, and then implement a transitional connection to the front sections.

The plurality of horizontal beams include a capping horizontal beam 21, a capping horizontal beam 23, a reinforcement horizontal beam 24, an auxiliary horizontal beam 25, and five middle-section horizontal beams 22. A free end of the front section of the first longitudinal beam 11 is connected to a free end of the front section of the second longitudinal beam 12 through the capping horizontal beam 21, and a free end of the rear section of the first longitudinal beam 11 is connected to a free end of the rear section of the second longitudinal beam 12 through the capping horizontal beam 22. Both the reinforcement horizontal beam 24 and the auxiliary horizontal beam 25 are connected between a middle part of the rear section of the first longitudinal beam 11 and a middle part of the rear section of the second longitudinal beam 12, and the auxiliary horizontal beam 25 is located on a side that is of the reinforcement longitudinal beam 24 and that is away from the capping horizontal beam 21, and is close to the middle section of the primary vehicle frame 1. The five middle-section horizontal beams 22 are connected between parts that are of the middle section of the first longitudinal beam 11 and the middle section of the second longitudinal beam 12 and that are parallel to each other, and the five middle-section horizontal beams 22 are evenly spaced in the longitudinal direction Y. In this way, a weight above the middle section is evenly and stably borne. A quantity of middle-section horizontal beams 22 is not limited to 5, and may alternatively be 3, 4, 6, 7, 8, or another quantity. The quantity of middle-section horizontal beams 22 is specifically determined based on a length of a middle section of the skateboard chassis 02 and a requirement for a bearing weight.

A cross section of the first longitudinal beam 11 may be in an approximately rectangular shape, and the first longitudinal beam 11 includes an upper surface and a lower surface that are disposed opposite to each other in a vertical direction Z, and an outer surface and an inner surface that are disposed opposite to each other in a vehicle width direction X. The inner surface is a surface close to the second longitudinal beam 12, and the outer surface is a surface away from the second longitudinal beam 12. The vertical direction Z is a height direction of the vehicle. A cross section of the second longitudinal beam 12 is also in a same shape. An inner surface of the second longitudinal beam 12 faces the first longitudinal beam 11, and an outer surface of the second longitudinal beam 12 faces away from the first longitudinal beam 11.

There is no secondary vehicle frame on the skateboard chassis 01, and the primary vehicle frame 1 may be manufactured by using an integrated molding process, for example, by using a high-pressure casting process; or may be manufactured in the following manner: separately forming the longitudinal beams and the horizontal beams, and then performing assembly through welding, riveting, a bolt connection, or the like; or may be manufactured by mixing the foregoing two processes, that is, some structures are integrally formed, for example, parts other than the capping horizontal beam 21 and the capping horizontal beam 23 are integrally formed, and then other structures are assembled later.

The electric drive assembly 32 is located between the first longitudinal beam 11 and the second longitudinal beam 12, and between the auxiliary horizontal beam 25 and the reinforcement horizontal beam 24, to implement spatial multiplexing in the vertical direction Z. In addition, because the rear section of the first longitudinal beam 11 and the rear section of the second longitudinal beam 12 both are of single-layer beam structures in the vertical direction Z, the rear section of the primary vehicle frame 1 occupies less space in the vertical direction Z, and no horizontal beam blocks the electric drive assembly 32. When the skateboard chassis 01 is assembled, the electric drive assembly 32 may be placed from top to bottom in the vertical direction Z, so that mounting operation difficulty is low, production efficiency is improved, and assembly precision is improved. There is no horizontal beam blocking below, so that the electric drive assembly 32 can be easily removed from below, to facilitate after-sales maintenance. Compared with a dual-layer longitudinal beam structure, the single-layer beam structure is simplified, and too many structural parts such as horizontal beams and columns are not required, to implement high integration. The single-layer beam structure means that there is only a single-layer structure in the vertical direction Z, and there is no bifurcation of secondary longitudinal beams with two or more layers in the vertical direction Z.

A steering gear 31 is provided at a connection location between the rear section and the middle section of the primary vehicle frame 1. The steering gear 31 includes a bar-shaped housing 312. For example, the bar-shaped housing 312 is in a cuboid shape. The bar-shaped housing 312 may be specifically integrally cast. Specifically, the bar-shaped housing 312 may be formed through die casting, or side walls of the bar-shaped housing 312 may be first separately manufactured and then welded or riveted, to form the closed housing through assembly. The bar-shaped housing 312 is not necessarily in a cuboid shape, provided that the bar-shaped housing 312 is of a roughly elongated bar-shaped structure. For example, a cross section of the bar-shaped housing 312 is in a circle, trapezoid, or regular hexagon shape, so that the bar-shaped housing 312 can support a horizontal beam, and accommodate a component of the steering gear 31. Structural strength of the bar-shaped housing 312 is enhanced by increasing a thickness of the bar-shaped housing 312 or the like, and the bar-shaped housing 312 may be used as a mechanical part of the primary vehicle frame 1. There is a first connection structure 110 connected to an end that is of the rear section of the first longitudinal beam 11 and that is close to the middle section, the first connection structure 110 is located on a surface (the inner surface of the first longitudinal beam 11) that is of the first longitudinal beam 11 and that faces the second longitudinal beam 12, and a partial surface that is of the first longitudinal beam 11 and that is connected to the first connection structure 110 is, for example, parallel to a YOZ plane. There is a second connection structure 120 connected to an end that is of the rear section of the second longitudinal beam 12 and that is close to the middle section, the second connection structure 120 is located on a surface (the inner surface of the second longitudinal beam 12) that is of the second longitudinal beam 12 and that faces the first longitudinal beam 11, and a partial surface that is of the second longitudinal beam 12 and that is connected to the second connection structure 120 is, for example, parallel to the YOZ plane. In this way, the first connection structure 110 and the second connection structure 120 are disposed opposite to each other in the vehicle width direction X, to prevent the auxiliary horizontal beam 25 from tilting. For example, the first connection structure 110 includes a first clamp plate 111 and a second clamp plate 112 that are disposed in parallel. The first clamp plate 111 and the second clamp plate 112 may be fastened to the first longitudinal beam 11 through welding, but a fastening manner is not limited to welding, provided that the first clamp plate 111 and the second clamp plate 112 can be separately fastened to the first longitudinal beam 11, for example, may be fastened through riveting. Alternatively, when the primary vehicle frame 1 is manufactured, the first clamp plate 111 and the second clamp plate 112 each are integrally cast with the first longitudinal beam 11 directly, so that structural stability is better, a process is simple, and a size and a location are accurate. The second connection structure 120 includes a third clamp plate 121 and a fourth clamp plate 122 that are disposed in parallel. The third clamp plate 121 and the fourth clamp plate 122 may be fastened to the second longitudinal beam 12 through welding. The first clamp plate 111, the second clamp plate 112, the third clamp plate 121, and the fourth clamp plate 122 are all, for example, parallel to an XOZ plane, but may alternatively be inclined relative to the XOZ plane to accommodate the bar-shaped housing 312 of different cross-sectional shapes. A distance between the first clamp plate 111 and the second clamp plate 112 is slightly greater than a distance between two opposite surfaces of the bar-shaped housing 312 that are disposed in the longitudinal direction Y, and the bar-shaped housing 312 extends in the vehicle width direction X. One end of the bar-shaped housing 312 is placed between the first clamp plate 111 and the second clamp plate 112, and is separately in contact with the first clamp plate 111 and the second clamp plate 112 through corresponding surfaces, to firmly limit the bar-shaped housing 312 in the longitudinal direction Y, and alleviate an overturning problem caused by rotation of the bar-shaped housing 312 around an axis of the bar-shaped housing 312. There is a large gap between the bar-shaped housing 312 and the first clamp plate 111 or the second clamp plate 112, which generates vibration and noise. The first clamp plate 111, the bar-shaped housing 312, and the second clamp plate 112 are sequentially penetrated through a first bolt 113, and are connected through a screw thread, to fasten the bar-shaped housing 312 in the vertical direction Z. However, it should be understood that the manner of fastening the bar-shaped housing 312 through the bolt is not limited. A clamping manner in which a groove and a protrusion cooperate with each other, an interference fit manner, and the like may alternatively be used, provided that the bar-shaped housing 312 can be detachably connected between the first clamp plate 111 and the second clamp plate 112, so that easy disassembly and assembly can be implemented, to facilitate after-sales maintenance and replacement. The other end of the bar-shaped housing 312 is fastened between the third clamp plate 121 and the fourth clamp plate 122 through a second bolt 123 in a similar manner. In the foregoing manner, the bar-shaped housing 312 is connected between the first connection structure 110 and the second connection structure 120, to reinforce a connection between the first longitudinal beam 11 and the second longitudinal beam 12, improve a fastening effect between the first longitudinal beam 11 and the second longitudinal beam 12, and increase a loading capacity of the skateboard chassis 01.

The bar-shaped housing 312 used as the auxiliary horizontal beam 25 is supported between the first longitudinal beam 11 and the second longitudinal beam 12, and the bar-shaped housing 312 and the auxiliary horizontal beam 25 are integrated. This helps improve system integration and arrangement compactness, improve space utilization, reduce a quantity of parts, simplify a structure of the skateboard chassis 01, and reduce costs. In addition, there is no need to find additional space for disposing the steering gear 31, so that space is spared for assembling another device, and utilization of space between the first longitudinal beam 11 and the second longitudinal beam 12 is improved.

The first clamp plate 111, the second clamp plate 112, the third clamp plate 121, and the fourth clamp plate 122 all do not limit a location of the bar-shaped housing 312 in the vertical direction Z. Therefore, when the steering gear 31 is assembled, the bar-shaped housing 312 is assembled between the first clamp plate 111 and the second clamp plate 112 and between the third clamp plate 121 and the fourth clamp plate 122 from top to bottom in the direction Z, and is fastened through the first bolt 113 and the second bolt 123. When the steering gear 31 needs to be repaired or replaced, the first bolt 113 and the second bolt 123 are disassembled, and the bar-shaped housing 312 is removed in the vertical direction Z, so that after-sales repair and replacement are convenient.

The first clamp plate 111 and the second clamp plate 112 are connected to a surface that is of the first longitudinal beam 11 and that faces the second longitudinal beam 12, instead of an upper surface and a lower surface that are located in the vertical direction Z of the first longitudinal beam 11. The third clamp plate 121 and the fourth clamp plate 122 are similar. In this way, the steering gear 31 and each of the first longitudinal beam 11 and the second longitudinal beam 12 implement spatial multiplexing in the vertical direction Z. This helps reduce an overall thickness of the skateboard chassis 01, or provides space for arranging other components in the vertical direction. In addition, this helps make arrangement space for upper and lower surfaces of the first longitudinal beam 11 and the second longitudinal beam 12 in the vertical direction, to arrange suspension swing arms (for example, first suspension swing arms 26a and 26b and second suspension swing arms 27a and 27b below).

A part that is of the first longitudinal beam 11 and that is located between the first clamp plate 111 and the second clamp plate 112 is provided with a first avoidance hole T1 that penetrates through the first longitudinal beam 11 in the vehicle width direction X, and a part that is of the second longitudinal beam 12 and that is located between the third clamp plate 121 and the fourth clamp plate 122 is provided with a second avoidance hole T2 that penetrates through the second longitudinal beam 12 in the vehicle width direction X. The steering gear 31 further includes a steering tie rod 313 extending from two ends of the bar-shaped housing 312 in the vehicle width direction X. The steering tie rod 313 separately penetrates through the first avoidance hole T1 and the second avoidance hole T2 in the vehicle width direction X, and extends to space outside the first longitudinal beam 11 and the second longitudinal beam 12, to provide feasibility of arranging the bar-shaped housing 312 between the first longitudinal beam 11 and the second longitudinal beam 12, and implementing spatial multiplexing in the vertical direction Z, and reduce a height of a longitudinal beam structure. In this way, a floor height of a passenger compartment is reduced, and space of the passenger compartment is increased. Compared with a case in which the steering tie rod of the steering gear needs to penetrate between the secondary longitudinal beam 103a and the secondary longitudinal beam 103b and between the secondary longitudinal beam 102a and the secondary longitudinal beam 102b in the technical solution in FIG. 2, in this technical solution, the rear section of the skateboard chassis 001 occupies less space in the vertical direction Z. This helps simplify a structure of the primary vehicle frame 1. In addition to a case in which both the first avoidance hole T1 and the second avoidance hole T2 are disposed, only the first avoidance hole T1 or the second avoidance hole T2 may be disposed for a vehicle model with only one-side steering.

A proper distance is maintained between the bar-shaped housing 312 and the first longitudinal beam 11 in the vehicle width direction X, to form a first gap G1, and a proper distance is maintained between the bar-shaped housing 312 and the second longitudinal beam 12 in the vehicle width direction X, to form a second gap G2. When the steering gear 31 is assembled, two ends of the steering tie rod 313 are first bent to proper degrees, and penetrate through the first avoidance hole T1 and the second avoidance hole T2. Then, the bar-shaped housing 312 is moved downward in the vertical direction Z, the steering tie rod 313 gradually restores from a bent state to a natural state. If the first gap G1 and the second gap G2 do not exist, accommodation space during bending is provided between the bar-shaped housing 312 and each of the first longitudinal beam 11 and the second longitudinal beam 12, and the steering tie rod 313 does not easily penetrate through the first avoidance hole T1 and the second avoidance hole T2.

In addition, both the first clamp plate 111 and the second clamp plate 112 may be parallel to an XOY plane, so that the first clamp plate 111 and the second clamp plate 112 are spaced from each other in the vertical direction Z. The third clamp plate 121 and the fourth clamp plate 122 are also spaced from each other in the vertical direction Z in a similar manner. In a manner similar to that in the embodiment corresponding to FIG. 3a, one end of the bar-shaped housing 312 is fastened between the first clamp plate 111 and the second clamp plate 112 through the first bolt 113, and the other end of the bar-shaped housing 312 is fastened between the third clamp plate 121 and the fourth clamp plate 122 through the second bolt 123. Therefore, the steering gear 31 may be assembled and disassembled in the longitudinal direction Y. Regardless of a manner of fastening the bar-shaped housing 312, the first avoidance hole T1 may be disposed at a location corresponding to the first connection structure 110, and the second avoidance hole T2 may be disposed at a location that is on the second longitudinal beam 12 and that corresponds to the second connection structure 12, to avoid the steering tie rod 313.

Still refer to FIG. 3b. A size of a location that is on the first longitudinal beam 11 and that corresponds to the first avoidance hole T1 is thickened in the vertical direction Z. Specifically, a wall above the first avoidance hole T1 may be thickened, to form a first protrusion M1. Structural strength of the location corresponding to the first avoidance hole T1 is enhanced, to counteract impact of disposing the first avoidance hole T1 on the structural strength of the first longitudinal beam 11 at the location. A surface that is of the first protrusion M1 and that is away from the first avoidance hole T1 may be an arc surface, or may be in smooth transition with an area adjacent to an upper surface of the first longitudinal beam 11, to reduce stress concentration. The arc surface of the first protrusion M1 may be coaxial with the first avoidance hole T1, so that a thickness between the arc surface of the first protrusion M1 and an inner wall of the first avoidance hole T1 may not change greatly in the longitudinal direction Y. This reduces stress concentration and improves structural stability. The first protrusion M1 may be separately disposed on two sides of the first avoidance hole T1 in the vertical direction Z, or the first protrusion M1 may be separately disposed on two sides in the vertical direction Z, so that the structural strength is further enhanced. However, the first protrusion M1 may alternatively be retained only on an upper side, to keep the lower surface of the first longitudinal beam 11 flush. In addition, the first clamp plate 111 and the second clamp plate 112 are connected to the surface that is of the first longitudinal beam 11 and that faces the second longitudinal beam 12, and do not interfere with the first protrusion M1 on the upper surface of the first longitudinal beam 11. Therefore, a size of the first protrusion M1 in the longitudinal direction Y is not limited by a spacing between the first clamp plate 111 and the second clamp plate 112, so that structural strength of the first longitudinal beam 11 at the location can be better enhanced.

Similarly, a second protrusion M2 may alternatively be formed above the second avoidance hole T2. For a structure, related beneficial effects, and possible deformation of the second protrusion M2, refer to those of the first protrusion M1.

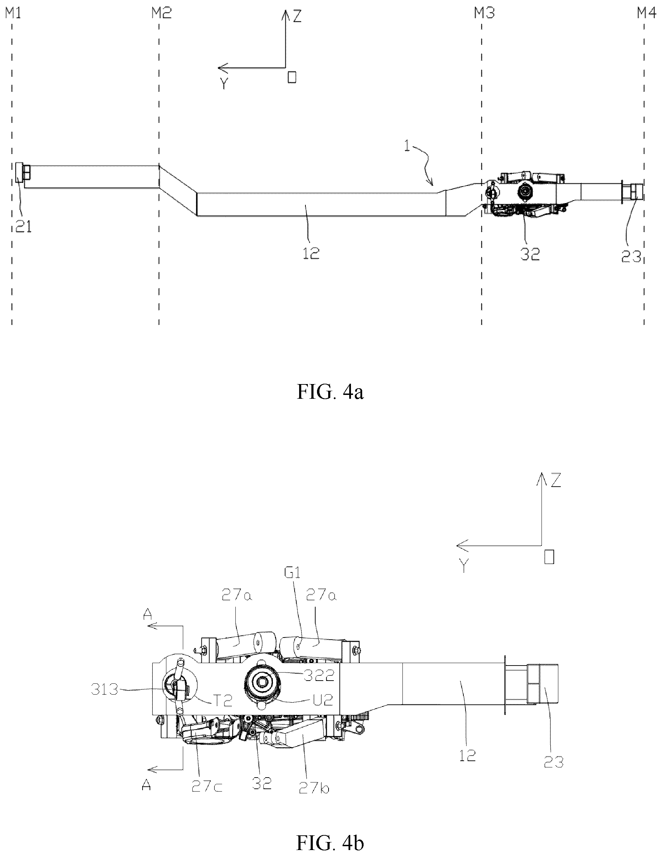

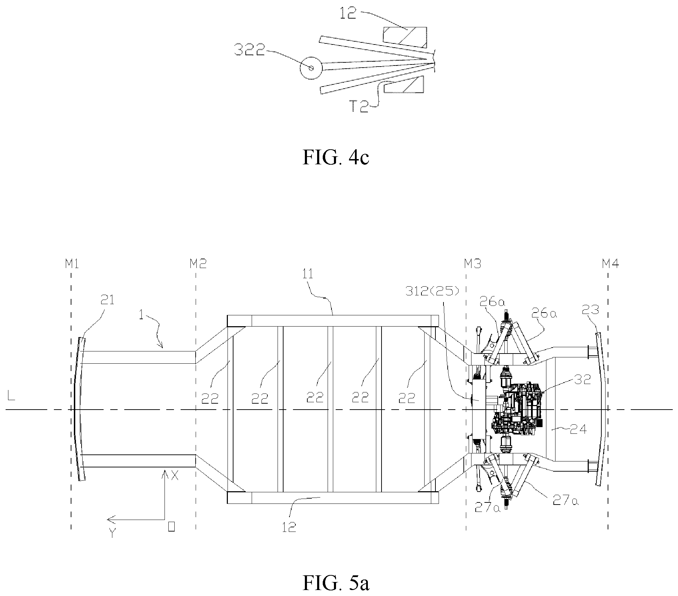

FIG. 4a is a main view of the skateboard chassis shown in FIG. 3a, FIG. 4b is a partial enlarged view of a rear section of the skateboard chassis shown in FIG. 4a, and FIG. 4c is an enlarged view of a sectional view in an A-A direction in FIG. 4b. As shown in FIG. 4c, an inner diameter of the second avoidance hole T2 gradually increases in a direction away from the first longitudinal beam 11, to form an expanded structure, to adapt to a divergent structure formed by a plurality of steering tie rods 313, and provide swing space for the steering tie rod 313 in a traveling process of the vehicle, to alleviate a problem that the steering tie rod 313 is damaged due to a collision. Compared with a cylindrical hole with a diameter equal to a maximum inner diameter of the expanded structure, a solid-structure ratio of the second longitudinal beam 12 may be increased in a part with a small inner diameter of the expanded structure, to provide swing space for the steering tie rod 313 while considering structural strength of the second longitudinal beam 12. The inner diameter of the second avoidance hole T2 may increase by a fixed slope. In this case, a bus of an inner wall of the second avoidance hole T2 is straight, and is suitable for the steering tie rod 313 that is made of a hard material and that is not prone to deformation. Alternatively, the inner diameter of the second avoidance hole T2 may increase by a gradually increasing slope. In this case, a bus of an inner wall of the second avoidance hole T2 is curve, so that larger swing space may be provided for the steering tie rod 313 at a location with a large inner diameter, and the bus is suitable for the steering tie rod that is made of a soft material and that is more prone to deformation. Similarly, in a direction away from the second longitudinal beam 12, an inner diameter of the first avoidance hole T1 may also gradually increase, to form an expanded structure. For beneficial effects of the expanded structure, refer to those of the second avoidance hole T2.

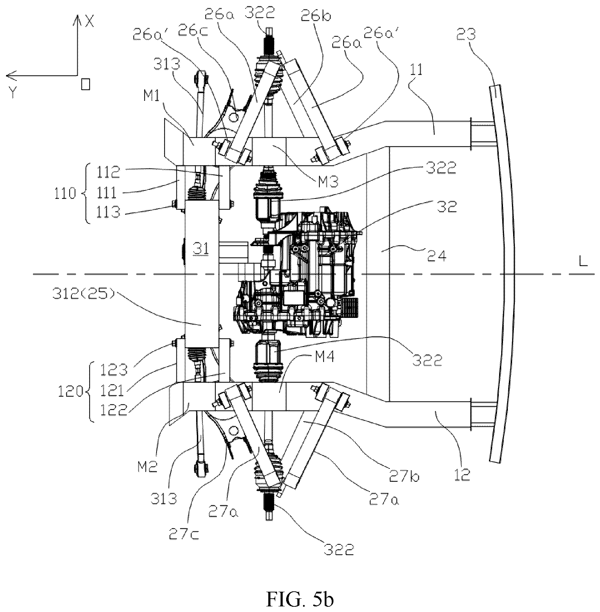

FIG. 5a is a top view of the skateboard chassis shown in FIG. 3a, and FIG. 5b is a partial enlarged view of a rear section of the skateboard chassis shown in FIG. 5a. With reference to FIG. 5a and FIG. 5b, with reference to FIG. 3b, FIG. 5a, and FIG. 5b, the electric drive assembly 32 has a transmission half shaft 322 extending toward two sides in the vehicle width direction X, a first via U1 is disposed at a location that is on the first longitudinal beam 11 and that corresponds to the electric drive assembly 32, and a second via U2 is disposed at a location that is on the second longitudinal beam 12 and that corresponds to the electric drive assembly 32. The first via U1 penetrates through the first longitudinal beam 11 in the vehicle width direction X, the second via U2 penetrates through the second longitudinal beam 12 in the vehicle width direction X, the first via U1 may be coaxial with the second via U2 in the vehicle width direction X, and the transmission half shaft 322 separately penetrates through the first via U1 and the second via U2, to output power. The first via U1 and the second via U2 each may also be of an expanded structure. An inner diameter of an end that is of the first via U1 and that is away from the second longitudinal beam 12 is large, and an inner diameter of an end that is of the second via U2 and that is away from the first longitudinal beam 11 is large. For specific forms and beneficial effects of the first via U1 and the second via U2, refer to those of the second avoidance hole T2. Similar to the first protrusion M1, a third protrusion M3 is provided on an upper surface of the first via U1 in the vertical direction Z, and a fourth protrusion M4 is provided on an upper surface of the second via U2 in the vertical direction Z. Alternatively, the third protrusion M3 may be located on a lower surface of the first longitudinal beam 11, and the fourth protrusion M4 may be located on a lower surface of the second longitudinal beam 12. For structures, functions, and possible deformation of the third protrusion M3 and the fourth protrusion M4, refer to those of the first protrusion M1. In addition to a case in which both the first via U1 and the second via U2 are disposed, only the first via U1 or only the second via U2 may be disposed.

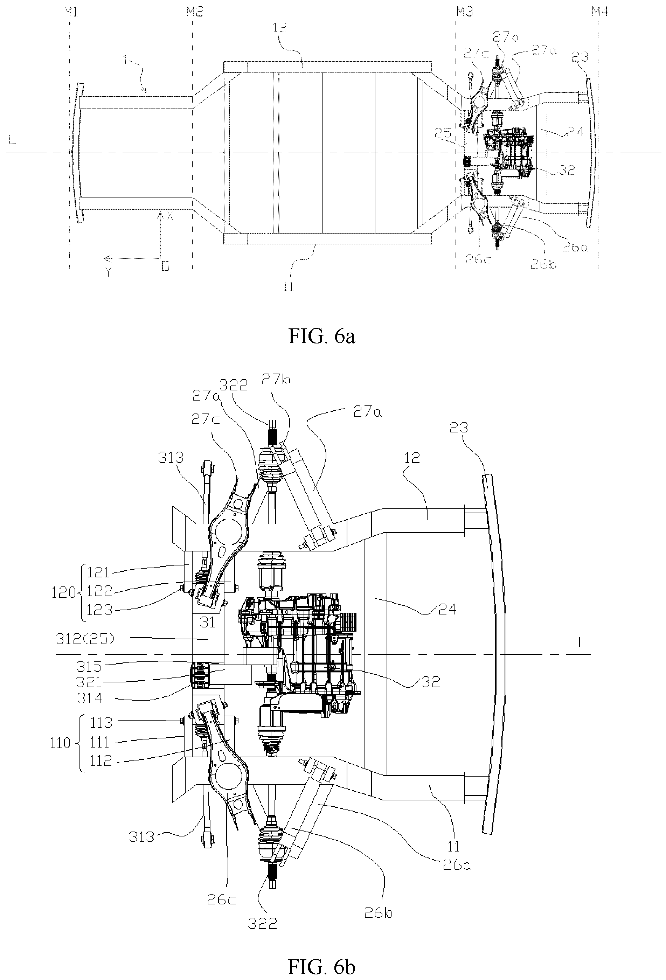

FIG. 6a is a bottom view of the skateboard chassis shown in FIG. 3a, and FIG. 6b is a partial enlarged view of a rear section of the skateboard chassis shown in FIG. 6a. With reference to FIG. 6a and FIG. 6b, the electric drive assembly 32 has a support shaft 321 extending in the longitudinal direction Y, the bar-shaped housing 312 is connected to a suspension support 314, and the suspension support 314 has a support hole 311 that penetrates in the longitudinal direction Y. The support shaft 321 is located in the support hole 311. In addition, interference fit is implemented through a soft pad between the support shaft 321 and the support hole 311, to stably fasten the support shaft 321 and implement buffering. Specifically, an accommodation groove 315 that penetrates in the longitudinal direction Y is formed on a lower surface of the bar-shaped housing 312, an inner wall of the accommodation groove 315 is an arc surface, the suspension support 314 is of a cylindrical structure whose axis extends in the longitudinal direction Y, and the support hole 311 is a circular channel coaxial with the cylindrical structure. A circumferential surface of the suspension support 314 adapts to and is attached to the inner wall of the accommodation groove 315. The suspension support 314 partially protrudes from the accommodation groove 315, and the suspension support 314 and the accommodation groove 315 may be fastened through welding. In this way, a contact area between the suspension support 314 and the bar-shaped housing 312 can be increased, and fastening stability can be improved. In addition, the suspension support 314 and the bar-shaped housing 312 implement spatial multiplexing in the vertical direction Z, to provide a condition for the electric drive assembly 32 to properly implement spatial multiplexing with the first longitudinal beam 11 and the second longitudinal beam 12 at a location in the vertical direction Z. This helps reduce a thickness of the rear section of the skateboard chassis 01. In addition, in the longitudinal direction Y, a length of the suspension support 314 is less than a length of the accommodation groove 315, and the suspension support 314 is located at an end that is of the accommodation groove 315 and that is away from the electric drive assembly 32.

In addition, the electric drive assembly 32 may also be connected to the reinforcement horizontal beam 24 in a similar manner, or may be detachably connected to the reinforcement horizontal beam 24 through a bolt or in another manner.

However, the suspension support 314 may alternatively be connected to the bar-shaped housing 312 in another manner, to support the electric drive assembly 32. A specific connection manner may be as follows: Specifically, when the bar-shaped housing 312 is cast, the suspension support 314 may be molded to form the support hole 311, so that the bar-shaped housing 312 and the suspension support 314 form an integrated cast structure. The structure may have functions of both the bar-shaped housing 312 and the suspension support 314, and has high connection stability, a simple manufacturing process, and high structure manufacturing precision. Alternatively, the suspension support 314 may be fastened to the bar-shaped housing 312 through welding, riveting, or the like; or may be detachably connected to the bar-shaped housing 312 through a bolt or the like.

With reference to FIG. 3b and FIG. 5b, two first suspension swing arms 26a are provided on an upper surface of the first longitudinal beam 11 in the vertical direction Z. Specifically, the first suspension swing arm 26a is welded on a pair of ear plates 26a' on the upper surface of the first longitudinal beam 11. The ear plates 26a' may also be integrally cast with the primary vehicle frame 1, and other ear plates may also be connected in this manner. The first suspension swing arm 26a is hinged between the pair of ear plates 26a' through a pin shaft. In the vehicle width direction X, both the two first suspension swing arms 26a extend in a direction away from the second longitudinal beam 12. In addition, an end that is of the first suspension swing arm 26a and that is away from the first longitudinal beam 11 is a free end. The free end is configured to connect to a suspension, is connected to a wheel through the suspension, and is located on a side that is of the first longitudinal beam 11 and that is away from the second longitudinal beam 12. In the direction away from the second longitudinal beam 12, the two first suspension swing arms 26a extend toward each other, in other words, in the longitudinal direction Y, the two first suspension swing arms 26a tilt toward each other, to form an acute angle. The acute angle is used to connect to a same suspension and provide a balanced force for the suspension in the longitudinal direction Y. An ear plate 26a' of one first suspension swing arm 26a is located between the first protrusion M1 and the third protrusion M3, to fully utilize a flat surface between the first protrusion M1 and the third protrusion M3, and an ear plate 26a' of the other first suspension swing arm 26a is located on a side that is of the third protrusion M3 and that is away from the first protrusion M1, to improve system integration, arrangement compactness, and space utilization. However, the first suspension swing arm 26a is not limited to being hinged to the first longitudinal beam 11 through the ear plate 26a', and the ear plate 26a' is merely used as a form of a hinge base. The first suspension swing arm 26a may alternatively be hinged to the first longitudinal beam 11 through another structure that is fastened to the first longitudinal beam 11 and that is used as the hinge base.

Both the two first suspension swing arms 26a are hinged to the upper surface of the first longitudinal beam 11 in the vertical direction Z, and are not hinged to a surface that is of the first longitudinal beam 11 and that is away from the second longitudinal beam 12. This saves space in the vehicle width direction X, alleviates a problem of occupying the suspension in the vehicle width direction X, and increases design space of a suspension system in the vertical direction Z, to alleviate a problem of a limited length of the first suspension swing arm 26a, and improve dynamic control performance of the vehicle.

Similarly, two second suspension swing arms 27a are provided on an upper surface of the second longitudinal beam 11 in the vertical direction Z, and the two second suspension swing arms 27a may be respectively symmetrical with the two first suspension swing arms 26a with respect to a central axis L. For specific structures and effect analysis of the second suspension swing arms 27a, refer to those of the first suspension swing arms 26a.

With reference to FIG. 3b and FIG. 6b, a first suspension swing arm 26b is hinged to a lower surface of the first longitudinal beam 11 in the vertical direction Z, and a first suspension swing arm 26c is hinged to a lower surface that is of the bar-shaped housing 312 and that is close to the first longitudinal beam 11. In the direction away from the second longitudinal beam 12, the first suspension swing arm 26b and the first suspension swing arm 26c extend toward each other, to be configured to jointly connect to one suspension through a free end, for example, jointly connect to the suspension with the two first suspension swing arms 26a.

Similarly, a second suspension swing arm 27b that is symmetrical with the first suspension swing arm 26b with respect to the central axis L is hinged to the lower surface of the first longitudinal beam 11, and a second suspension swing arm 27c that is symmetrical with the first suspension swing arm 26c with respect to the central axis L is hinged to a lower surface that is of the bar-shaped housing 312 and that is close to the second longitudinal beam 12. The second suspension swing arm 27b and the second suspension swing arm 27c are close to each other and are configured to jointly connect to one suspension, for example, jointly connect to the suspension with the two second suspension swing arms 27a.

Each of the first suspension swing arm 26c and the second suspension swing arm 27c may alternatively be hinged to another surface of the bar-shaped housing 312. Regardless of which surface of the bar-shaped housing 312 to which each of the first suspension swing arm 26c and the second suspension swing arm 27c is hinged, in the vertical direction Z, projection of the first suspension swing arm 26c overlaps projection of the first longitudinal beam 11, and projection of the second suspension swing arm 27c overlaps projection of the second longitudinal beam 12. In this way, spatial multiplexing is implemented in the vehicle width direction X.

However, based on different settings of suspension hard points, connection manners of the first suspension swing arms and the second suspension swing arms are not limited to the foregoing manners. When the projection of the first suspension swing arm overlaps the projection of the first longitudinal beam 11 in the vertical direction Z, space in the vehicle width direction X can be saved. This alleviates a problem of a limited length of the first suspension swing arm, and improves dynamic control performance of the vehicle. Similarly, the projection of the second suspension swing arm also overlaps the projection of the second longitudinal beam 12 in the vertical direction Z.

In addition, a quantity of first suspension swing arms and a quantity of second suspension swing arms are not limited to the quantities shown in the figure, and are subject to a case in which the suspension can be stably supported. In addition, the first suspension swing arm may be disposed only on the upper surface or the lower surface of the first longitudinal beam 11, and the second suspension swing arm may be disposed only on the upper surface or the lower surface of the second longitudinal beam 12.

In the foregoing embodiments, structures such as the electric drive assembly 32, the bar-shaped housing 312 (the auxiliary horizontal beam 25), the first suspension swing arm, and the second suspension swing arm are all located in the rear section of the primary vehicle frame 1. The foregoing structures may alternatively be disposed in a front section of the primary vehicle frame 1 in a similar manner. In addition, correspondingly, a front section of the first longitudinal beam 11 and a front section of the second longitudinal beam 12 are also single-layer beam structures. On the premise that the foregoing related technical principles are used, these structures may be adjusted to meet requirements such as a mounting environment, device arrangement, and collision security of the front section of the primary vehicle frame 1.

Based on a structural form in which the skateboard chassis 01 and the upper vehicle body 02 are separated from each other, a structure of the primary vehicle frame 1 is simplified, the bifurcated dual-layer longitudinal beams are integrated into a single-layer longitudinal beam, and the auxiliary horizontal beam 25 and the steering gear 31 are physically integrated or the like. This reduces structure complexity, simplifies a manufacturing process, and improves space utilization.

Based on a same inventive concept, an embodiment of this application further provides a vehicle. As shown in FIG. 1, the vehicle provided in this embodiment of this application includes a skateboard chassis 01 and an upper vehicle body 02. The upper vehicle body 02 is located above the skateboard chassis 01, and is connected to the first longitudinal beam 11 and the second longitudinal beam 12, or may be connected to an interface at another location on the primary vehicle frame 1, to form the entire vehicle. For beneficial effects of the vehicle, refer to those of the skateboard chassis 01 provided in the foregoing embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A skateboard chassis, comprising a primary vehicle frame and an electric drive assembly, wherein the primary vehicle frame comprises a first longitudinal beam, a second longitudinal beam, and a plurality of horizontal beams; and the first longitudinal beam and the second longitudinal beam are spaced apart in a vehicle width direction, each of the horizontal beams is connected between the first longitudinal beam and the second longitudinal beam, and the plurality of horizontal beams are spaced apart; and
the electric drive assembly is disposed between a front section of the first longitudinal beam and a front section of the second longitudinal beam, and both the front section of the first longitudinal beam and the front section of the second longitudinal beam are of single-layer beam structures; or
the electric drive assembly is disposed between a rear section of the first longitudinal beam and a rear section of the second longitudinal beam, and both the rear section of the first longitudinal beam and the rear section of the second longitudinal beam are of single-layer beam structures.

2. The skateboard chassis according to claim 1, wherein the electric drive assembly has a transmission half shaft; and
a first via that penetrates through the first longitudinal beam in the vehicle width direction is formed at a location that is on the first longitudinal beam and that corresponds to the electric drive assembly, and the transmission half shaft penetrates through the first via; and/or
a second via that penetrates through the second longitudinal beam in the vehicle width direction is formed at a location that is on the second longitudinal beam and that corresponds to the electric drive assembly, and the transmission half shaft penetrates through the second via.

3. The skateboard chassis according to claim 2, wherein an inner diameter of the first via gradually increases in a direction away from the second longitudinal beam; and
an inner diameter of the second via gradually increases in a direction away from the first longitudinal beam.

4. The skateboard chassis according to claim 1, wherein the skateboard chassis further comprises a plurality of first suspension swing arms and a plurality of second suspension swing arms, the first suspension swing arms are hinged to the first longitudinal beam or the horizontal beams, and the second suspension swing arms are hinged to the second longitudinal beam or the horizontal beams; and
in a vertical direction, projection of each of the first suspension swing arms overlaps projection of the first longitudinal beam, and projection of each of the second suspension swing arms overlaps projection of the second longitudinal beam.

5. The skateboard chassis according to claim 4, wherein at least some of the first suspension swing arms are hinged to at least one surface that is of the first longitudinal beam and that is located in the vertical direction; and
at least some of the second suspension swing arms are hinged to at least one surface that is of the second longitudinal beam and that is located in the vertical direction.

6. The skateboard chassis according to any one of claims 1 to 5, wherein the first longitudinal beam is provided with a first connection structure, the second longitudinal beam is provided with a second connection structure, and the first connection structure and the second connection structure are disposed opposite to each other in the vehicle width direction; and
the skateboard chassis further comprises a steering gear, the steering gear comprises a bar-shaped housing, and the bar-shaped housing is connected between the first connection structure and the second connection structure, to form one of the horizontal beams.

7. The skateboard chassis according to claim 6, wherein the first connection structure is located on a surface that is of the first longitudinal beam and that faces the second longitudinal beam, and the second connection structure is located on a surface that is of the second longitudinal beam and that faces the first longitudinal beam.

8. The skateboard chassis according to claim 7, wherein the first connection structure comprises two first clamp plates that are parallel to each other, and the second connection structure comprises two second clamp plates that are parallel to each other; and
one end of the bar-shaped housing is detachably connected between the two first clamp plates, and the other end of the bar-shaped housing is detachably connected between the two second clamp plates.

9. The skateboard chassis according to claim 7, wherein the steering gear further comprises a steering tie rod extending from two ends of the bar-shaped housing; and
a first avoidance hole that penetrates through the first longitudinal beam in the vehicle width direction is provided at a location that is on the first longitudinal beam and that corresponds to the first connection structure, and the steering tie rod penetrates through the first avoidance hole; and/or
a second avoidance hole that penetrates through the second longitudinal beam in the vehicle width direction is provided at a location that is on the second longitudinal beam and that corresponds to the second connection structure, and the steering tie rod penetrates through the second avoidance hole.

10. The skateboard chassis according to claim 9, wherein an inner diameter of the first avoidance hole gradually increases in the direction away from the second longitudinal beam; and
an inner diameter of the second avoidance hole gradually increases in the direction away from the first longitudinal beam.

11. The skateboard chassis according to claim 6, wherein the bar-shaped housing is connected to a suspension support, the suspension support has a support hole, the electric drive assembly is connected to a support shaft, and the support shaft is located in the support hole.

12. The skateboard chassis according to claim 11, wherein the bar-shaped housing and the suspension support are of an integrally cast structure.

13. The skateboard chassis according to claim 6, wherein when the skateboard chassis further comprises the plurality of first suspension swing arms and the plurality of second suspension swing arms, at least some of the first suspension swing arms are hinged to the bar-shaped housing, and at least some of the second suspension swing arms are hinged to the bar-shaped housing.

14. A vehicle, comprising an upper vehicle body and the skateboard chassis according to any one of claims 1 to 13, wherein
the upper vehicle body is fastened to the first longitudinal beam and the second longitudinal beam.
